# EUROPÄISCHE PATENTSCHRIFT

(11) **EP 1 655 064 B1**
(45) Veröffentlichungstag und Bekanntmachung des Hinweises auf die Patenterteilung: **20.07.2011**
(21) Anmeldenummer: 05024285.8
(22) Anmeldetag: 08.11.2005
(51) Int. Cl.: B01D 45/08

(54) **Regenerierbarer Filter**
Regenerable filter
Filtre régénérable

(30) Priorität: 09.11.2004 DE 202004017413 U
(43) Veröffentlichungstag der Anmeldung: 10.05.2006
(73) Patentinhaber: Big Dutchman International GmbH, 49377 Vechta (DE)
(72) Erfinder: Meerpohl, Bernd, 49377 Vechta/Langförden (DE)
(74) Vertreter: Eisenführ, Speiser & Partner

(56) Entgegenhaltungen:
- EP-A- 0 285 322
- WO-A-94/13387
- WO-A-94/28997
- DE-U1- 9 404 440
- US-B1- 6 328 778

## Beschreibung

Die Erfindung betrifft ein Filterelement zur Abtrennung von Partikeln aus einem partikelbelasteten Rohgasstrom, umfassend eine erste Filterwand mit mehreren ersten Durchtrittsöffnungen zum Eintritt des verschmutzten Rohgases, eine zweite Filterwand, welche in Strömungsrichtung hinter der ersten Filterwand angeordnet ist und mehrere zweite Durchtrittsöffnungen zum Austritts des Reingases aufweist, einen zwischen der ersten und der zweiten Filterwand ausgebildeten Zwischenströmungsraum, wobei die zweiten Durchtrittsöffnungen in Strömungsrichtung versetzt zu den ersten Durchtrittsöffnungen angeordnet sind, die zweite Filterwand mindestens einen Prallwandbereich aufweist, der so angeordnet ist, dass die durch die ersten Durchtrittsöffnungen hindurchtretenden Partikel zumindest teilweise darauf treffen, und die erste und/oder die zweite Filterwand als wechselweise einwärts und auswärts zum Zwischenströmungsraum gefaltete Wand ausgebildet ist, insbesondere als gefaltete Folie oder Platte. Filterelemente der vorgenannten Art sind bekannt zur Filterung der Abluft in Lackieranlagen. Diese Filterelemente beruhen auf dem Funktionsprinzip der Fliehkraftabscheidung. Bei diesem Prinzip tritt die partikelbelastete Abluft, also der Rohgasstrom, durch die ersten Durchtrittsöffnungen in das Filterelement ein und wird aufgrund der versetzen Anordnung der zweiten Durchtrittsöffnungen im Zwischenströmungsraum abgelenkt. Bei diesem Ablenkungsvorgang können die Partikel im Rohgasstrom, die eine höhere Dichte aufweisen als das sie mitführende Rohgas, dem Strömungsverlauf nicht folgen und treffen auf die Prallwand. Die Partikel haften an der Prallwand an und sammeln sich daher in diesem Prallwandbereich, wohingegen der von den Partikeln befreite Gasstrom durch die zweiten Durchtrittsöffnungen als Reingas aus dem Filterelement austritt.

In den Filtern der vorgenannten Art baut sich auf diese Weise allmählich während der Betriebsdauer eine Partikelschicht auf, die nach einer bestimmten Betriebsdauer zu einer Verstopfung des Filters oder einer Erhöhung des Strömungswiderstandes des Filters führt. In diesem Fall ist es erforderlich, die vorbekannten Filter auszutauschen und das verschmutzte Filterelement durch ein neues Filterelement zu ersetzen.

Die vorbekannten Filterelemente werden, da sie als nicht wiederverwendbares Wegwerfelement genutzt werden, vorzugsweise aus kostengünstigen Materialien, insbesondere Papier und Pappe, hergestellt. Aus DE 1 293 004 A ist bekannt, solche Filter aus Metall, Papier, Karton- oder Kunststofffolien herzustellen.

Aus US 6,328,778 B1 ist eine Filtervorrichtung bekannt, welche aus einem oberen Rahmenelement und einem unteren Rahmenelement zusammengesetzt ist, die durch eine Vielzahl von Faltpunkten es ermöglichen, das Filtermedium längsweise zu kollabieren.

Aus WO 94/26997 ist ein Filterelement bekannt, welches aus zwei Lagen besteht, die jeweils an Faltlinien miteinander verbunden sind und durch Falten des Filterelements entlang dieser Faltlinien ebenfalls ein Kollabieren des Filterelements ermöglichen.

Ein erstes Problem der bekannten Filterelemente besteht darin, dass der regelmäßig erforderliche Austausch der Filterelemente zu einem erhöhten Abfallvolumen führt. Weiterhin verursacht der regelmäßig erforderliche Austausch des Filterelements erhöhte Betriebskosten, da es regelmäßig erforderlich ist die alten, verstopften Filterelemente durch neue Filterelemente zu ersetzen.

Ein weiteres Problem der bekannten Filterelemente besteht darin, dass insbesondere dann, wenn höherwertige Filtermaterialien wie Kunststoffe, Metalle o.ä. verwendet werden, die Filter oftmals sperrig sind, da diese höherwertigen Materialien auch erhöhte Festigkeiten aufweisen und sich dadurch die Filterwände kaum oder schlecht verfomen und das Filterelement sich hinsichtlich seines Volumens kaum komprimieren lassen.

Dieser Nachteil tritt besonders in solchen Anwendungen auf, in denen mit den bekannten Filterelementen eine große Wandfläche abgedeckt werden soll, um beispielsweise auf diese Weise eine Filterung auch feinster Partikel bei gleichzeitig hohem Volumendurchsatz zu erzielen. In diesem Anwendungsfall ist es erforderlich, die Durchtrittsöffnungen klein zu gestalten und die Umlenkung des Gasstroms im Zwischenströmungsbereich möglichst spitzwinklig auszuführen, um auch die Abscheidung feinster Partikel aus dem Rohgasstrom zu erreichen. Bei solchen Anwendungsfällen ist es jedoch wünschenswert sowohl die neuen Filterelemente in einem kompakten Packungsvolumen transportieren und lagern zu können als auch die verbrauchten Filterelemente in kompaktem Format entsorgen zu können. Gerade für solche großflächigen Anwendungen sind daher nur Filterelemente aus Papier und Pappe bekannt, da sich bei Herstellung des Filterelements aus diesen Werkstoffen eine solche Verringerung des Transport- und Lagervolumens aufgrund der guten elastischen Verformbarkeit des Materials erzielen lässt.

Ein weiteres Problem bekannter Filterlemente liegt darin, dass sie sich für eine Reihe von Anwendungsfällen nicht nutzen lassen. So ist es beispielsweise im Bereich landwirtschaftlicher Betriebe, insbesondere in der Tierhaltung, aufgrund zunehmend verschärfter Emissionsvorschriften erforderlich, die Abluft aus Betriebsräumen, wie beispielsweise Ställen, zu reinigen. Diese Abluft ist regelmäßig erheblich staubbelastet und führt zudem oftmals Tierausscheidungen mit sich. Dies führt bei bekannten Filterlementen zu einer raschen Verstopfung und/oder zu einem chemischen Angriff auf das Filtermaterial, der die Funktion beeinträchtigt. In beiden Fällen ist ein Austausch der Filterelemente in sehr kurzen Zeitabständen erforderlich, was diese bekannten Filterlemente nicht wirtschaftlich nutzbar macht in solchen Anwendungen.

Der Erfindung liegt die Aufgabe zugrunde, ein Filterelement bereitzustellen, welches die vorgenannten Probleme verringert oder vermeidet.

Diese Aufgabe wird erfindungsgemäß durch Filterelement gemäß Anspruch 1 gelöst. Durch die erhöhte Verformbarkeit im Bereich der Faltungen ist es auf einfache Weise möglich, das Filterelement in einem im Verhältnis zum Betriebszustand kompaktes Volumen zu verringern, indem es entlang der Faltungen abgeknickt wird, so dass die Wände der Filterwand im kompaktierten Format vollständig oder nahezu aneinander liegen. Die erfindungsgemäße Ausführungsform ermöglicht dadurch die Verwendung einer Vielzahl von Materialien. Durch das erfindungsgemäße Filterelement wird daher auch ermöglicht, für großflächige Filteranordnungen Filterelemente aus anderen Materialien als Papier oder Pappe zu verwenden. Somit werden durch die Erfindung Filterelemente aus chemikalisch beständigen Materialien ermöglicht.

Die erhöhte Verformbarkeit im Bereich der Faltungen kann sowohl durch eine erhöhte elastische Verformbarkeit als auch durch eine erhöhte plastische Verformbarkeit oder eine Kombination hieraus bereitgestellt werden. Unter Verformbarkeit ist hierbei in erster Linie zu verstehen, dass sich das Material im entsprechenden Bereich bei einer geringeren Krafteinwirkung verformen lässt als der restliche Wandbereich. Weiterhin ist unter Verformbarkeit im Sinne der Erfindung zu verstehen, dass sich das Filtermaterial in den entsprechenden Bereich spitzwinkliger falten lässt, vorzugsweise zu einem höheren Grad als der übrige Wandbereich verformen lässt, als der übrige Wandbereich, ohne dass eine Materialschädigung auftritt.

Es ist regelmäßig vorteilhaft, wenn die erste Filterwand an der zweiten Filterwand befestigt ist. Diese Befestigung kann insbesondere im Bereich der Faltungen erfolgen, beispielsweise durch Verschweißung oder Verklebung.

Es hat sich überraschend gezeigt, dass die erfindungsgemäße Fortbildung des bekannten Filterelements auch für den Herstellungsvorgang vorteilhaft ist, da die Ausbildung der Falten des Filterelements durch die erhöhte Verformbarkeit erleichtert wird.

Bei einer ersten vorteilhaften Ausführungsform ist die gesamte erste und/oder zweite Filterwand flüssigkeitsbeständig ausgebildet. Diese Ausführungsform ermöglicht, dass die im Filterelement angesammelten Partikel durch einen Reinigungsvorgang mit einer Flüssigkeit, beispielsweise durch Hochdruckreinigen mit Wasser, entfernt werden. Durch diese Fortbildung wird auf besonders einfache Weise die Wiederherstellung des ursprünglichen Durchsatzvolumens ermöglicht, wenn sich Partikel im Filterelement abgesetzt haben.

Die zuvor genannte Fortbildung des Filterelements kann in vorteilhafter Weise weiter verbessert werden, indem der Prallwandbereich bzw. die Filterwände aus einem Grundmaterial, vorzugsweise Papier oder Pappe, bestehen und mit einem flüssigkeitsbeständigen Material beschichtet sind. Diese Ausführungsform ermöglicht es, dass eine Reinigung des Filterelements mit einer Flüssigkeit durchgeführt wird, ohne das hierzu das gesamte Filterelement aus einem flüssigkeitsbeständigen Material hergestellt sein muss. Die vorteilhafte Verformbarkeit einer Reihe nicht flüssigkeitsbeständiger und kostengünstiger Grundmaterialien kann daher zur Komprimierung des Volumens des Filterelements für den Transport oder die Lagerung genutzt werden, ohne dass die Nachteile dieser Grundmaterialien, die regelmäßig einen Austausch erfordern, wenn das Filterelement mit Partikeln zugesetzt ist, in Kauf genommen werden müssen.

Dabei ist es insbesondere vorteilhaft, wenn als flüssigkeitsbeständiges Material für diese Beschichtung oder für die Filterwände ein Kunststoff verwendet wird. Kunststoffe weisen den Vorteil auf, dass sie gegenüber einer Reihe von Flüssigkeiten beständig sind, so ist eine Reinigung, gegebenenfalls mit zugesetzten Reinigungsmitteln, möglich, ohne dass der Kunststoff beschädigt wird. Weiterhin hat es sich als vorteilhaft erwiesen, dass Kunststoffe gegenüber einer Reihe von Chemikalien beständig sind und somit auch die Filterung chemisch aggressiver Stoffe aus dem Rohgasstrom ermöglichen, ohne dass die herausgefilterten, chemischen Stoffe das Filterelement beschädigen. Insbesondere eignen sich für das erfindungsgemäße Filterelement Massenkunststoffe wie Polypropylen (PP), Polyethylen (PE), Polyvinylchlorid (PVC) oder Polycarbonat (PC).

Es ist weiterhin vorteilhaft, wenn der Bereich um die am Filterelement außenliegenden Faltstellen der zweiten Filterwand der Prallwandbereich ist. Diese Konfiguration ermöglicht eine besonders effektive Filterung, da der Rohgasstrom in diesem Fall durch die ersten Durchtrittsöffnungen auf den Faltbereich der zweiten Filterwand gelenkt wird und somit eine scharfe Ablenkung erfährt, um aus dieser Ecke heraus gelenkt zu werden.

Es ist weiterhin vorteilhaft, wenn beide Filterwände so gefaltet sind, dass die Abstände zwischen den Faltungen, insbesondere den außenliegenden Faltungen, der ersten Filterwand gleich sind zu den Abständen zwischen den Faltungen, insbesondere den innenliegenden Faltungen, der zweiten Filterwand und die beiden Filterwände so zueinander angeordnet sind, dass sich jeweils gleichsinnige Faltungen gegenüberliegen. Auf diese Weise wird eine im Querschnitt doppelte, zickzackförmige Geometrie erzielt, die einerseits den Vorteil aufweist, dass die Filterwand insbesondere bei vertikaler Ausrichtung der Faltungen eine ausreichende Stabilität aufweist, um beispielsweise im Bereich einer Wand selbsttragend angeordnet zu werden. Weiterhin lässt sich bei dieser Geometrie eine besonders gute Komprimierung der Filterwand zum Zwecke des Transportes oder der Lagerung erzielen.

Die ersten und zweiten Durchtrittsöffnungen können in vielfältiger Weise in der ersten bzw. zweiten Filterwand angeordnet sein. Dabei ist anzustreben, eine ausreichende Umlenkung des Rohgasstroms auf dem Weg zwischen der Eintrltss- zur Austrittsöffnung zu erzielen und eine Verstopfung der Öffnungen durch gefilterte Partikel zu verhindern.

Insbesondere können die ersten Durchtrittsöffnungen im Bereich der innenliegenden Falten der ersten Filterwand angeordnet sein.

Weiterhin können die ersten Durchtrittsöffnungen alternativ oder zusätzlich zur vorgenannten Ausführungsform im Bereich der außenliegenden Falten der ersten Filterwand angeordnet sein.

Die zweiten Durchtrittsöffnungen können vorteilhaft im Bereich der innenliegenden Falten der zweiten Filterwand angeordnet sein.

In den drei vorgenannten Fällen können die Öffnungen jeweils seitlich von den Falten, beispielsweise als mehrere paarweise angeordnete Öffnungen etwa symmetrisch beiderseits der Falten angeordnet sein oder als jeweils eine Öffnung, die sich über die Falte erstreckt und somit teilweise in dem einen und teilweise in dem anderen Wandbereich liegt. So können beispielsweise die ersten Durchtrittsöffnungen als Löcher ausgebildet sein, die sich jeweils zur Hälfte in dem links und rechts von der Faltung liegenden Wandbereich befinden.

Weiterhin ist es in vielen Anwendungfällen alternativ oder zusätzlich vorteilhaft, wenn die zweiten Durchtrittsöffnungen im Wandbereich zwischen den Falten der zweiten Filterwand angeordnet sind. Die Anordnung der zweiten Durchtrittsöffnungen kann in diesen Ausführungsformen in Durchströmungsrichtung des Filterelements hinter den ersten Durchtrittsöffnungen liegen, so dass eine spitzwinklige Ablenkung des Rohgasstroms und folglich eine besonders effiziente Filterung erreicht wird.

Es ist insbesondere vorteilhaft, wenn die erste und/oder zweite Filterwand in der Faltungslinie eine gegenüber dem restlichen Wandbereich verringerte Festigkeit aufweist. Die verringerte Festigkeit führt regelmäßig dazu, dass bei Einwirken von Kräften auf die Filterwand eine Verformung insbesondere in der Faltungslinie erzielt wird. Die verringerte Festigkeit kann beispielsweise durch geänderte Materialeigenschaften oder eine geänderte Geometrie im Bereich der Faltungslinie erzielt werden.

Erfindungsgemäß weist die erste und/oder zweite Filterwand in der Faltungslinie eine abschnittsweise gegenüber dem restlichen Wandbereich verringerte Wandstärke auf. Die verringerte Wandstärke kann beispielsweise in Form einer spanenden Entfernung eines Teils der Wand (Ritzung, Einkerbung etc.) erzielt werden. Dabei kann eine diskontinuierliche Wandstärkenverringerung, bei der nur Abschnitte der Faltungslinie wandstärkenverringert sind, ausgeführt werden. Insbesondere ist es vorteilhaft, wenn die Wandstärkenverringerung durch eine Verformung ohne Materialentfernung erzielt wird, wobei beispielsweise das Wandmaterial aus dem Bereich der Faltungslinie in den neben der Faltungslinie liegenden Bereich verdrängt wird.

Weiterhin ist es in bestimmten Anwendungen vorteilhaft, wenn die erste und/oder zweite Filterwand in der Faltungslinie aus einem anderen Material besteht als der restliche Wandbereich. So kann beispielsweise im Bereich der Faltungslinie ein Material mit geringerem Elastizitätsmodul und/oder leichterer plastischer Verformbarkeit bereitgestellt werden. Weiterhin ist es möglich, das Material der Filterwand durch nachträgliche Behandlung (beispielsweise Bestrahlung, Wärmebehandlung, chemische Behandlung) in den Eigenschaften so zu verändern, dass ein anderes Material mit für die Faltung vorteilhaften Eigenschaften erzeugt wird.

Insbesondere ist es vorteilhaft, wenn die erste und/oder zweite Filterwand in der Faltungslinie Perforationen aufweist. Auf diese Weise wird eine Schwächung des Faltungslinienbereiches erreicht, die eine bessere Verformbarkeit entlang der Faltungslinie bereitstellt, um so die erfindungsgemäßen Vorteile zu erzielen. Die Perforationen können in Form von Löchern in gleichmäßigen Abständen, Langlöchern oder ähnlichem ausgebildet sein.

Ein weiterer Aspekt der Erfindung ist ein Gasfilter mit mehreren nebeneinander und/oder übereinander angeordneten Filterelementen der zuvor beschriebenen Art. Die erfindungsgemäßen Filterelemente können regelmäßig aufgrund von Fertigungsrestriktionen, insbesondere Restriktionen hinsichtlich der Verfügbarkeit der Ausgangshalbzeuge für die Herstellung des Filterelements nur in begrenzten Abmessungen verfügbar sein. Um einen Gasfilter mit großer Eintritts- und Austrittsfläche bereitzustellen ist es daher regelmäßig erforderlich, mehrere Filterelemente aneinander zu reihen. Die Filterelemente können dabei einerseits seitlich nebeneinander angeordnet werden, um ein Gasfilter zu erzielen, der sich über eine längere Wand erstreckt. Weiterhin können die Filterelemente übereinander angeordnet werden, um einen Gasfilter zu erzielen, der sich über eine große Höhe erstreckt. Schließlich ist es in bestimmten Anwendungen vorteilhaft, die erfindungsgemäßen Filterelemente auch hintereinander anzuordnen, so dass die von dem ersten Filterelement gefilterte Luft nach Austritt aus dem ersten Filterelement in das dahinter angeordnete zweite Filterelement eintritt und dort erneut gefiltert wird. Auf diese Weise ist eine verbesserte Filterleistung möglich. Insbesondere ist eine Kombination der vorgenannten Anordnungen in vielen Anwendungsfällen vorteilhaft.

Der erfindungsgemäße Gasfilter kann fortgebildet werden, indem die Filterelemente übereinander angeordnet sind und mittels eines Verbindungsprofils miteinander verbunden sind, umfassend einen oberen Aufnahmebereich zum Aufnehmen des oberen Filterelements, einen unteren Aufnahmebereich zum Aufnehmen des unteren Filterelements, einen zwischen den beiden Aufnahmebereichen angeordneten Partikelsammelbereich, und zumindest eine zwischen dem oberen Aufnahmebereich und dem Partikelsammelbereich angeordnete Öffnung, durch welche die Partikel aus dem oberen Filterelement in den Partikelsammelbereich fallen können.

Das erfindungsgemäße Verbindungsprofil ermöglicht eine besonders kostengünstige und stabile vertikale Aneinanderreihung mehrerer Filterelemente. Das erfindungsgemäße Verbindungsprofil vermeidet hierbei die Notwendigkeit, dass Partikel, die im oberen Filterelement gesammelt werden, bei Reinigung des Filterelements durch das untere Filterelement abgeführt werden müssen, was oftmals zu Verstopfungen des unteren Filterelements führen könnte. Auf diese Weise wird ein wirksamer Aufbau von Gasfiltern aus mehreren übereinander gestapelten Filterelementen ermöglicht, ohne dass durch die schwerkraftbedingte Abfuhr der gesammelten Partikel Probleme insbesondere im unteren Bereich des Gasfilters auftreten.

Dabei ist es insbesondere vorteilhaft, wenn eine Öffnungsklappe, die im geschlossenen Zustand den Partikelsammelbereich von der Umgebung abschließt und im geöffneten Zustand das Entfernen der gesammelten Partikel aus dem Partikelsammelbereich ermöglicht, bereitgestellt wird. Die Öffnungsklappe ist dann üblicherweise im Betriebszustand bei angeschalteten Gebläsen geschlossen, um das Aufwirbeln der Partikel im Sammelbereich zu verhindern. Wird das Gebläse abgeschaltet, um den erfindungsgemäßen Gasfilter zu reinigen, so kann die Öffnungsklappe geöffnet werden und ein leichter Zugang zu den gesammelten Partikeln ist möglich.

Die beiden vorgenannten Ausführungsformen können weiter fortgebildet werden, indem zwischen dem Partikelsammelbereich und dem oberen bzw., dem unteren Aufnahmebereich ein horizontaler Wandabschnitt ausgebildet ist, der den Eintritt von Rohgas aus dem Partikelsammelbereich des Verbindungsprofils in den Zwischenströmungsbereich des Filterelements verhindert. Dies ist insbesondere vorteilhaft, wenn die erste Filterwand gefaltet ist, um auf diese Weise zu vermeiden, dass durch die in den hervorstehenden Faltungen am unteren und oberen Ende des Filterelements bereitgestellten seitlichen Öffnungen ein Zutritt von Rohgasstrom in den Zwischenströmungsbereich erfolgt, der nicht in der für die Filterung erforderlichen Strömungsrichtung stattfinden würde und folglich den Durchtritt von Partikeln durch das Filterelement ermöglichen würde.

Weiterhin ist es vorteilhaft, wenn bei einem erfindungsgemäßen Gasfilter auch das unterste Filterelement durch ein Verbindungsprofil der vorgenannten Art am Boden abgestützt ist. In diesem Fall kann der untere Aufnahmebereich des Verbindungsprofils zwar zur Aufnahme eines unteren Filterelements ausgebildet sein, dient aber der Abstützung des Filterelements am Boden. Dies stellt eine kostengünstige und wartungsarme Ausführungsform des erfindungsgemäßen Filters dar.

Ein bevorzugtes Herstellungsverfahren umfasst die Schritte:
- Bereitstellen einer ersten Wandplatte für eine erste Filterwand,
- Bereitstellen einer zweiten Wandplatte für eine zweite Filterwand,
- Einbringen von ersten Öffnungen in die erste Filterwand,
- Einbringen von zweiten Öffnungen in die zweite Filterwand,
- Verbinden der ersten Filterwand mit der zweiten Filterwand,
wobei die erste und/oder die zweite Filterwand in einem Extrusionsverfahren aus einem Kunststoff hergestellt wird.

Bei diesem Herstellungsverfahren werden die erste und/oder die zweite Wandplatte kostengünstig und reproduzierbar aus einem wasserbeständigen Material hergestellt und auf diese Weise die Wasserbeständigkeit des Filterelements sichergestellt.

Dabei ist es vorteilhaft, wenn in der ersten und/oder der zweiten Wandplatte ein linienförmiger Faltungsbereich erzeugt wird, der besser verformbar ist als der übrige Wandbereich. Der so erzeugte linienförmige Faltungsbereich kann vorteilhaft dazu genutzt werden, die für die Herstellung des Filterelements erforderliche Faltung auszuführen. Dabei ist es insbesondere vorteilhaft, wenn mehrere solcher linienförmigen Faltungsbereiche nebeneinander und parallel zueinander angeordnet sind, um auf diese Weise die wechselweise, zickzack-förmige Faltung erzielen zu können. Die Verformbarkeit kann sowohl im elastischen, als auch im plastischen oder im elastoplastischen Bereich besser sein als im übrigen Wandbereich. Zur Definition der besseren Verformbarkeit wird auf die vorangegangene Beschreibung verwiesen.

Dabei ist es von Vorteil, wenn in der ersten und/oder der zweiten Wandplatte eine linienförmige Materialschwächung eingebracht wird. Auf diese Weise kann die Faltung erleichtert werden, da bei Aufbringen einer Faltkraft auf die Wandplatte sich diese bevorzugt entlang der linienförmigen Materialschwächung falten lässt.

Erfindungsgemäß wird die Verbesserung der Verformbarkeit durch eine abschnittsweise Verringerung der Wandstärke erzeugt wird, vorzugsweise durch einen spanlosen Umformvorgang. So kann beispielsweise durch einen linienförmigen Prägevorgang, bei dem aus einem linienförmigen Bereich Material zu den Seiten verdrängt wird, eine solche Wandstärkenverringerung erzielt werden. Weiterhin kann durch spanende Verfahren, z.B. Ritzen, Anreißen, Fräsen, Hobeln oder ähnliche die gewünschte Wandstärkenverringerung erzielt werden.

Insbesondere kann die Verformbarkeit verbessert werden, indem eine linienförmige Perforation erzeugt wird. Auf diese Weise wird durch diskontinuierliche Materialentfernung entlang der Linie eine strukturelle Schwächung erreicht, die eine bevorzugte Verformung bei Krafteinleitung im Bereich der Linie bewirkt.

Insbesondere ist es bevorzugt, dass der linienförmige Faltungsbereich mittels eines hinter dem Extrusionswerkzeug angeordneten Werkzeugs zur Erzeugung der Wandstärkenverringerung bzw. der Perforation dient. Das solcherart angeordnete Werkzeug kann, im Falle, dass der linienförmige Faltungsbereich sich in Extrusionsrichtung erstrecken soll, beispielsweise in Form eines Prägewerkzeugs, dass auf die aus dem Extrusionswerkzeug austretende Wandplatte aufgesetzt wird eine Wandstärkenverringerung oder eine Perforation mittels entsprechender abrollender Stifte, Zähne oder Ähnlichem erzeugt. Im Falle, dass sich der linienförmige Faltungsbereich quer zur Extrusionsrichtung erstrecken soll, kann die Materialschwächung in Form einer Wandstärkenverringerung oder Perforation durch ein quer zur Extrusionsrichtung über die Wandplatte laufendes Werkzeug erzeugt werden, vorzugsweise ein diagonal verlaufendes Werkzeug, um auf diese Weise bei fortschreitender Extrusion eine senkrecht zur Extrusionsrichtung liegende Materialschwächung einzubringen.

So kann die Prägung oder Perforation erfolgen, indem beispielsweise eine quer zur Extrusionsrichtung verlaufende Walze, auf deren Umfang entsprechende Präge- oder Perforationsvorrichtungen, die sich parallel oder quer zur Extrusionsrichtung erstrecken, aufgebracht sind, hinter dem Extrusionswerkzeug auf der extrudierten Wandplatte abrollt und auf diese Weise die gewünschte Materialschwächung zu erzielen.

Insbesondere ist es bevorzugt, wenn sich der linienförmige Faltungsbereich in Extrusionsrichtung erstreckt. Die Erstreckungsrichtung des Faltungsbereichs hat eine konstruktionstechnische Bedeutung, da die maximale Breite von extrudierten Platten in der hier erforderlichen Stärke begrenzt ist und derzeit maximal etwa 1,5m bis 2m beträgt. Da die mit dem Herstellungsverfahren erzeugten Filterelemente im späteren Gebrauch vorzugsweise so aufgestellt werden, dass sich die Falten in vertikaler Richtung erstrecken, um so eine erleichterte Abfuhr der gesammelten Partikel aus dem Zwischenströmungsbereich zu ermöglichen, ist es erforderlich, die Ausrichtung der Falten zur Extrusionsrichtung an die später gewünschte Geometrie des gesamten Filterelements anzupassen. So ist es für Anwendungen, in denen ein Filterelement an eine sich in horizontaler Richtung weit erstreckende Wand angebracht werden soll vorteilhaft, wenn sich die Falten quer zur Extrusionsrichtung erstrecken, da in diesem Fall eine beliebig lange Filterwand bzw. ein beliebig langes Filterelement mit einer begrenzten Höhe (entsprechend der maximalen Extrusionsbreite) hergestellt werden kann. Ist es hingegen gewünscht, dass das herzustellende Filterelement im späteren Einsatz sich im Wesentlichen in vertikaler Richtung erstreckt und nur eine geringe Breite in horizontaler Richtung abdecken muss, so ist es vorteilhaft, wenn sich die Falten in Extrusionsrichtung erstrecken. In diesem Fall kann eine beliebig hohe Filterwand bzw. ein beliebig hohes Filterelement erzeugt werden, dessen Breite durch die maximale Extrusionsbreite begrenzt ist. Diese Breite ist ggf. noch verringert durch die Faltung der Wandplatte, bei der sich die tatsächliche Breite der Filterwand reduzieren, beispielsweise bei einem Faltwinkel von 30° halbieren kann.

Im Fall, dass sich der linienförmige Faltungsbereich in Extrusionsrichtung erstreckt, ist es bevorzugt, wenn der linienförmige Faltungsbereich mittels eines Extrusionswerkzeugs erzeugt wird, das eine Öffnung entsprechend des Querschnitts der Wandplatte aufweist mit entsprechenden Vorsprüngen zur Erzeugung der Wandstärkenverringerung(en). In diesem Fall kann eine Materialstärkenverringerung bereits im Extrusionswerkzeug erzielt werden.

Weiterhin ist es in diesem Fall vorteilhaft, wenn die Verbesserung der plastischen Verformbarkeit durch eine Coextrusion eines besser verformbaren Materials im linienförmigen Faltungsbereich erzeugt wird. So kann ein Material mit verringertem Elastizitätsmodul linienförmig in die extrudierte Wandplatte eingespritzt werden und auf diese Weise den Faltungsbereich definieren.

Beim erfindungsgemäßen Herstellungsverfahren ist es insbesondere bevorzugt, wenn die ersten und/oder zweiten Öffnungen durch Stanzen in die erste bzw. zweite Filterwand eingebracht werden.

Weiterhin ist es bevorzugt, wenn die Öffnungen vor dem Faltvorgang eingebracht werden.

Im Falle der Ausrichtung der Falten in Extrusionsrichtung ist es besonders bevorzugt, wenn die erste Filterwand und/oder die zweite Filterwand mittels eines im Querschnitt zickzackförmigen Extrusionswerkzeugs als aufeinanderfolgend wechselseitig gefaltete Wand extrudiert wird. Auf diese Weise kann die maximale Extrusionsbreite vollkommen ausgenutzt werden, um eine maximal breite Filterwand herzustellen. Die so bei Extrusion einer flachen Wandplatte und nachträglicher Faltung auftretende Reduzierung der Filterwandbreite kann auf diese Weise vermieden werden.

Insbesondere ist es dabei bevorzugt, wenn die erste Filterwand und die zweite Filterwand mittels eines Extrusionswerkzeugs mit zwei voneinander beabstandeten, im Querschnitt zickzackförmigen Extrusionsquerschnitten als zwei aufeinanderfolgend wechselseitig gefaltete Wände extrudiert werden. So können die beiden Filterwände mittels zweier vertikal voneinander beabstandeter Extrusionswerkzeuge parallel extrudiert werden, um auf diese Weise eine parallele Weiterverarbeitung der beiden Filterwände nach dem Extrusionsvorgang in einfacher Weise ausführen zu können.

Insbesondere kann die erste Filterwand und die zweite Filterwand nach dem Extrusionsvorgang miteinander verbunden werden, vorzugsweise durch Verschweißung, Verklebung oder durch mechanische Verklammerung. Hierzu wird auf die vorangehende Beschreibung verwiesen.

Insbesondere ist es bevorzugt, dass die erste Filterwand und die zweite Filterwand miteinander verbunden extrudiert werden. In diesem Fall werden die beiden Filterwände in einem einzigen Extrusionswerkzeug ausgeformt, welches zwei zickzackförmige Schlitze aufweist, die an den Verbindungsstellen solcherart zusammengeführt sind, dass sich Verbindungsbereiche, insbesondere Verbindungsstege oder Ähnliches, zwischen den beiden extrudierten Wänden bereits beim Extrusionsvorgang ausbilden und folglich auf eine nachträgliche Verbindung der beiden Filterwände verzichtet werden kann.

Im Falle, dass die Filterwände als ebene Flächen extrudiert werden ist es bevorzugt, dass die Filterwand mittels eines dem Extrusionswerkzeug nachgeschalteten Umformwerkzeug wechselseitig gefaltet wird, vorzugsweise mittels Warmverformung. Diese Verformung kann durch übliche Walz-, Walzpräge- oder Tiefziehbearbeitungsverfahren erfolgen. Die Werkzeuge können dabei beheizt sein, um einen guten plastischen Verformungszustand der Wandplatten herbeizuführen. Weiterhin können die Filterwände vor dem Verformungsvorgang mittels separater Heizmittel erwärmt werden.

Dabei ist es insbesondere bevorzugt, wenn die extrudierte Filterwand vor oder bei dem Faltvorgang quer zur Extrusionsrichtung gestreckt wirkt. Auf diese Weise kann das Problem der maximal verfügbaren Extrusionsbreite als limitierender Faktor für die maximal herstellbare Filterelementbreite fertigungstechnisch gelöst werden, indem eine Wandplatte mit erhöhter Wandstärke extrudiert wird und diese Wandplatte nachfolgend durch Verstreckung quer zur Extrusionsrichtung, beispielsweise durch einen Walzvorgang, auf eine größere Breite gedehnt wird.

Die Öffnungen können dabei vor oder nach dem Faltvorgang und vor oder nach dem Dehnungsvorgang eingebracht werden. Gegebenenfalls hat in diesem Fall eine Berücksichtung der nachfolgenden Verstreckung oder der Ausrichtung des Wandbereichs bei der Auswahl des Werkzeugs und der Werkzeugabmessung zur Einbringung der Öffnungen zu erfolgen.

Es ist in bestimmten Anwendungsfällen vorteilhaft, wenn sich der linienförmige Faltungsbereich quer zur Extrusionbsrichtung erstreckt.

Die Öffnungen können bevorzugt mittels einer dem gefalteten Filterquerschnitt angepassten Matrize nach dem Faltvorgang eingebracht werden.

Schließlich umfasst ein weiteres Herstellungsverfahren für ein Filterelement der vorgenannten Art die Schritte:
- Bereitstellen einer ersten Wandplatte für eine erste Filterwand,
- Bereitstellen einer zweiten Wandplatte für eine zweite Filterwand,
- Einbringen von ersten Öffnungen in die erste Filterwand,
- Einbringen von zweiten Öffnungen in die zweite Filterwand,
- Verbinden der ersten Filterwand mit der zweiten Filterwand,

wobei die erste und/oder die zweite Filterwand in einem Thermoformverfahren aus einem Kunststoffhalbzeug hergestellt wird.

Das Thermoformverfahren ermöglicht einerseits die Herstellung einer entsprechend gefalteten Filterwand aus einem plattenförmigen Ausgangshalbzeug in einem einzigen Arbeitsschritt.

Weiterhin können bei dem Thermoformverfahren die Öffnungen in der ersten bzw. der zweiten Wandplatte direkt ausgebildet werden, so dass eine nachträgliche Bearbeitung zur Einbringung dieser Öffnungen entfallen kann.

Eine bevorzugte Ausführungsform des erfindungsgemäßen Filterelements wird anhand der Figuren beschrieben. Es zeigen:
- Figur 1: eine Querschnittsansicht eines Ausschnitts des erfindungsgemäßen Filterelements,
- Figur 2: eine perspektivische Ansicht eines Ausschnitts des erfindungsgemä- ßen Filterelements,
- Figur 3: eine Draufsicht auf einen Ausschnitt der ersten Filterwand,
- Figur 4: eine Querschnittsansicht eines Ausschnitts der ersten Filterwand,
- Figur 5: eine Draufsicht auf die zweite Filterwand,
- Figur 6: eine Querschnittsansicht einen Ausschnitt der zweiten Filterwand,
- Figur 7: eine perspektivische Ansicht des Verbindungsprofils zum Verbinden zweier Filterelemente, und
- Figur 8: eine Querschnittsansicht des Verbindungsprofils der Figur 7.

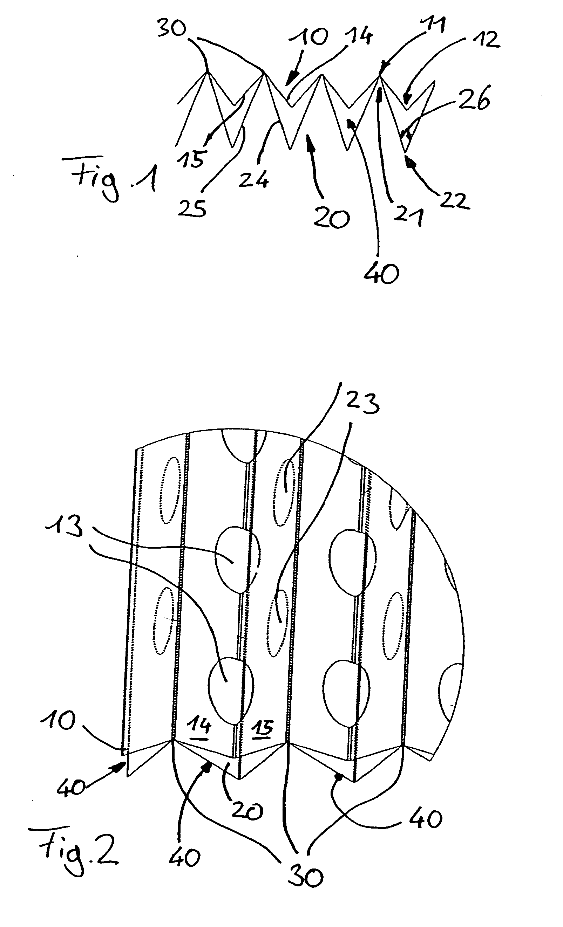

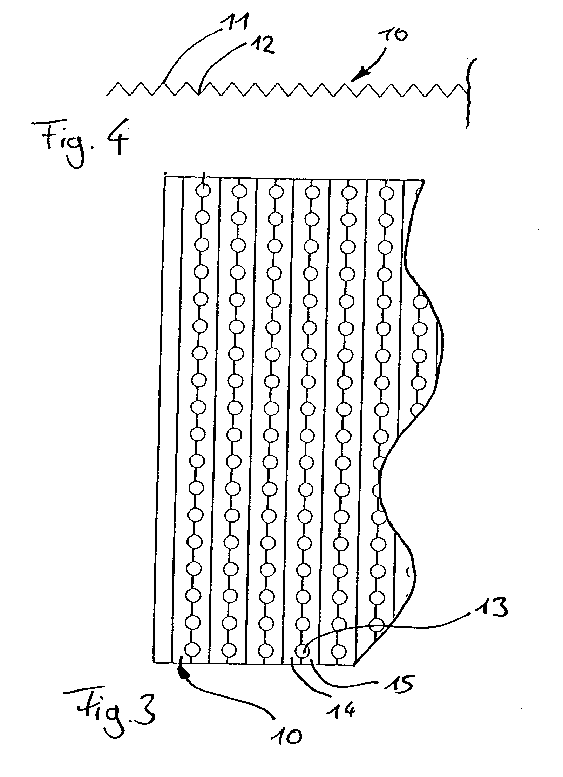

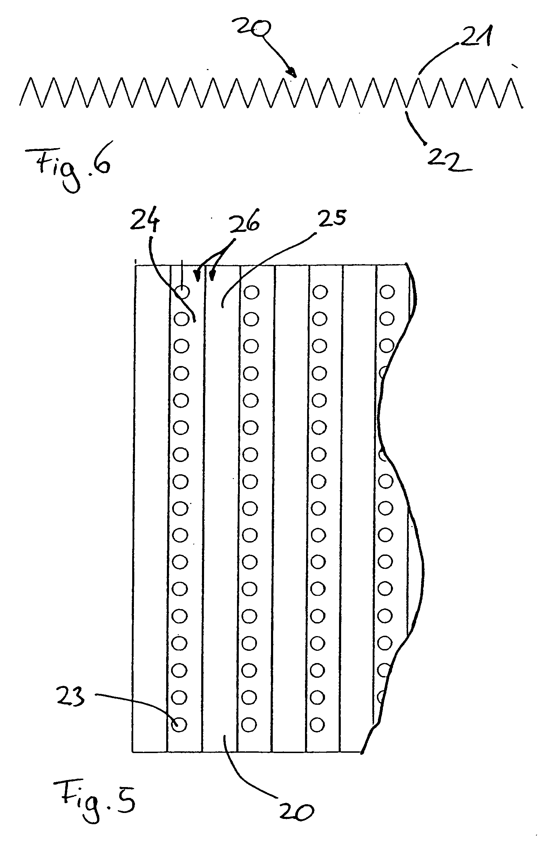

Das in den Figuren 1 und 2 dargestellte Filterelement umfasst eine in den Figuren 3 und 4 im Detail dargestellte erste Filterwand 10, an der eine eine in den Figuren 5 und 6 im Detail dargestellte zweite Filterwand 20 entlang linienförmiger Verbindungsbereiche 30 befestigt ist. Figur 2 zeigt eine perspektivische Ansicht des Filterelements von der Ausströmseite, die zweite Filterwand ist zum besseren Verständnis des Aufbaus des Filterelements transparent dargestellt.

Die erste Filterwand 10 ist wechselweise einwärts und auswärts gefaltet, so dass sich außenliegende Faltkanten 11 und innenliegenden Faltkanten 12 wechselweise ergeben.

Im Bereich der innenliegenden Faltkanten 12 sind in der ersten Filterwand in regelmäßigen Abständen entlang der Faltlinien 12 Öffnungen 13 ausgebildet. Die Öffnungen 13 umgreifen die innenliegende Faltlinie 12 und erstrecken sich in die beiden in der Faltlinie 12 zusammentreffenden Wandbereiche 14, 15 der ersten Filterwand 10. Dabei sind die Öffnungen nicht exakt mittig zur Faltlinie ausgerichtet, sondern etwas exzentrisch, so dass sich ein größerer Teil der Öffnung 13 in den Wandbereich 14 der ersten Filterwand erstreckt und ein kleinerer Teil der Öffnung 13 in den daran anschließenden Wandbereich 15 der ersten Filterwand.

Die zweite Filterwand ist, ebenso wie die erste Filterwand, wechselweise einwärts und auswärts gefaltet, so dass sich innenliegende Faltkanten 21 und außenliegende Faltkanten 22 und Wandabschnitte 24, 25 zwischen den Faltkanten ergeben. Der Abstand zwischen zwei innenliegenden Faltkanten 21 der zweiten Filterwand ist ebenso groß wie der Abstand zwischen zwei außenliegenden Faltkanten 11 der ersten Filterwand.

Die zweite Filterwand ist in einem spitzeren Winkel gefaltet als die erste Filterwand. Die Wandabschnitte zwischen zwei Faltungen der zweiten Filterwand sind länger als diejenigen zwischen zwei Faltungen der ersten Filterwand.

Die erste Filterwand und die zweite Filterwand sind solcher Art aneinander gefügt, dass die innenliegenden Faltstellen 21 der zweiten Filterwand in Kontakt mit den außenliegenden Faltstellen 11 der ersten Filterwand sind. In diesen Bereichen stehen die beiden Filterwände linienförmig in Kontakt miteinander. Die Filterwände können entlang dieser beiden Faltstellen kontinuierlich (beispielsweise durch Verklebung) oder diskontinuierlich (beispielsweise durch Punktverschweißung) miteinander verbunden sein.

Die beiden zwischen einer innenliegenden Faltstelle der zweiten Filterwand liegenden Wandbereiche bilden einen dreieckigen Querschnitt aus. Auf einer Seite dieses dreieckigen Wandquerschnitts sind zwischen der außenliegenden Faltung 22 und der innenliegenden Faltung 21 in regelmäßigen Abständen Öffnungen 23 entlang der Faltlinien in die zweite Filterwand eingebracht.

Die Öffnungen 23 sind in Strömungsrichtung versetzt zu den Öffnungen 13 der ersten Filterwand. Die Öffnungen 23 befinden sich in demjenigen Wandbereich, der der Seite abgewandt ist, zu der sich die Öffnung 13 in der ersten Filterwand aufgrund ihrer Exzentrizität weiter erstrecken.

Zwischen der ersten und der zweiten Filterwand ist ein Zwischenströmungsbereich 40 ausgebildet, der sich kanalförmig in Richtung der Falten erstreckt und durch die Verbindung der beiden Filterwände im Bereich der Faltungen 11, 21 in mehrere parallel verlaufende Kanäle unterteilt ist.

Die durch die ersten Öffnungen 13 eintretende Rohluft tritt in den Zwischenströmungsbereich 40 in Richtung auf die außenliegende Faltstelle 22 der zweiten Filterwand ein. Die Rohgasströmung wird im Zwischenströmungsbereich in Richtung auf die Austrittsöffnungen 23 im zweiten Filterwand nahezu rechwinklig ablenkt. Die dichteren Partikel im Rohgasstrom können dieser Ablenkung nicht folgen und treffen auf den um die außenliegende Faltkante 22 der zweiten Filterwand ausgebildeten Prallwandbereich 26. Die Partikel haften dort an oder lagern sich in diesem Bereich auf bereits anhaftende Partikel an oder fallen schwerkraftbedingt entlang der bei dem dargestellten Filterelement vertikal sich erstreckenden Faltlinie 22 herab.

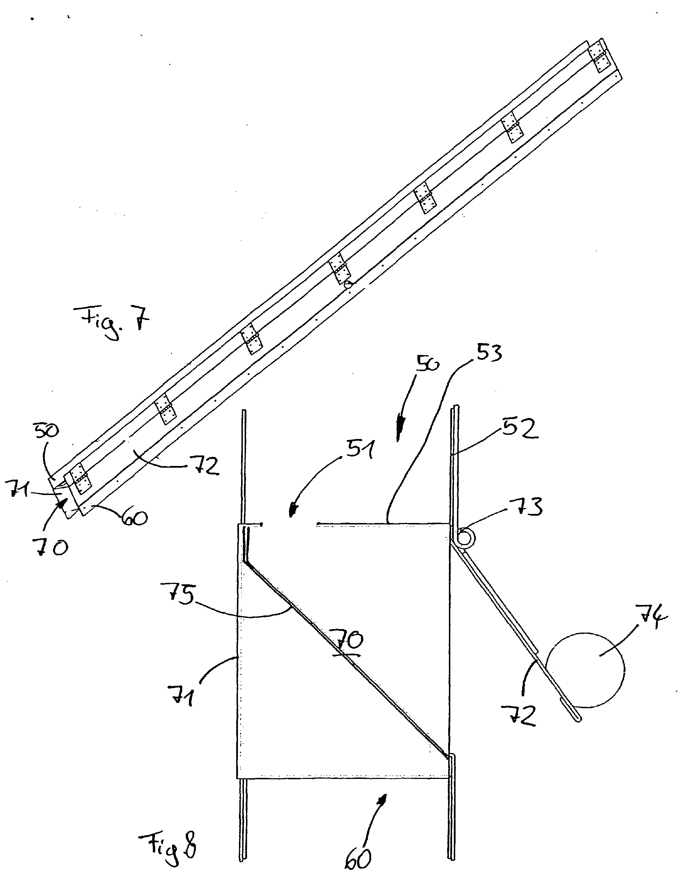

Bezugnehmend auf Figur 7 und 8 umfasst ein erfindungsgemäßes Verbindungsprofil zwei U-Profile 50, 60, die beabstandet voneinander und mit den Schenkeln jeweils voneinander wegweisend gegenüberliegend angeordnet sind und parallel zueinander erstrecken. Zwischen den beiden U-Profilen 50, 60 ist ein im Querschnitt rechteckiger Zwischenraum angeordnet, der durch eine sich entlang der Erstreckungsrichtung der U-Profile erstreckenden Seitenwand 73 und die Basisflächen der beiden U-Profile oben und unten sowie eine Öffnungsklappe 72 begrenzt wird. Die Öffnungsklappe 72 ist durch mehrere Scharniere 73 an einem Schenkel des oberen U-Profils befestigt und kann mittels eines Griffes 74 geöffnet werden, um den Zwischenraum zwischen den beiden U-Profilen 50, 60 zugänglich zu machen.

Die Grundfläche des oberen U-Profils 50 weist eine sich längserstreckende Öffnung 51 oder mehrere in Längsrichtung voneinander beabstandete Öffnungen 51 auf, durch welche die in einem oberen, zwischen den beiden Schenkeln des oberen U-Profils angeordneten Filterelement gesammelten Partikel in den Zwischenraum 70 fallen können. Diese durchfallenden Partikel treffen auf eine schräg angeordnete Gleitfläche 75, auf der sie in Richtung der Öffnungsklappe 72 rutschen.

Die Grundfläche des unteren U-Profils ist geschlossen. Die Öffnung 51 ist solcher Art beabstandet von dem lufteinlassseitigen Schenkel 52 des oberen U-Profils, dass ein Eintritt des Rohgases durch die vorstehenden Falten in den Zwischenströmungsbereich durch den Wandbereich 53 verhindert wird.

## Patentansprüche

1. Filterelement zur Abtrennung von Partikeln aus einem partikelbelasteten Rohgasstrom, umfassend:
- eine erste Filterwand (10) mit mehreren ersten Durchtrittsöffnungen (13) zum Eintritt des verschmutzten Rohgases,
- eine zweite Filterwand (20), welche in Strömungsrichtung hinter der ersten Filterwand angeordnet ist und mehrere zweite Durchtrittsöffnungen (23) zum Austritt des Reingases aufweist,
- einen zwischen dem ersten und der zweiten Filterwand ausgebildeten Zwischenströmungsraum (40),
wobei die zweiten Durchtrittsöffnungen (23) in Strömungsrichtung versetzt zu den ersten Durchtrittsöffnungen (13) angeordnet sind,
die zweite Filterwand mindestens einen Prallwandbereich (26) aufweist, der so angeordnet ist, dass die durch die ersten Durchtrittsöffnungen hindurchtretenden Partikel zumindest teilweise darauf treffen, und
die erste und/oder die zweite Filterwand als wechselweise einwärts und auswärts zum Zwischenströmungsraum gefaltete Wand ausgebildet ist, insbesondere als gefaltete Folie oder Platte,
**dadurch gekennzeichnet, dass** die Wand der ersten und/oder zweiten Filterwand im Bereich der Faltungen (11, 12; 21, 22) eine gegenüber dem restlichen Wandbereich (14, 15, 24, 25) erhöhte Verformbarkeit aufweist, indem die Wand der ersten und/oder zweiten Filterwand in der Faltungslinie eine abschnittsweise gegenüber dem restlichen Wandbereich verringerte Wandstärke aufweist.

2. Filterelement nach Anspruch 1,
**dadurch gekennzeichnet, dass** die gesamte erste (10) und/oder zweite (20) Filterwand flüssigkeitsbeständig ausgebildet ist.

3. Filterelement nach dem vorhergehenden Anspruch 1 oder 2,
**dadurch gekennzeichnet, dass** ein flüssigkeitsbeständiger Prallwandbereich bzw. die Filterwand/Filterwände (10; 20) aus einem Grundmaterial, vorzugsweise Papier oder Pappe, bestehen und mit einem flüssigkeitsbeständigen Material beschichtet sind.

4. Filterelement nach einem der vorhergehenden Ansprüche,
**dadurch gekennzeichnet, dass** der Bereich (26) um die am Filterelement außenliegenden Faltstellen (22) der zweiten Filterwand (20) der Prallwandbereich ist.

5. Filterelement nach einem der vorhergehenden Ansprüche, bei dem beide Filterwände gefaltet sind,
**dadurch gekennzeichnet, dass** die Abstände zwischen den außenliegenden Faltungen (11) der ersten Filterwand gleich sind zu den Abständen zwischen den innenliegenden Faltungen (21) der zweiten Filterwand und die beiden Filterelemente so zueinander angeordnet sind, dass sich jeweils gleichsinnige Faltungen gegenüberliegen.

6. Filterelement nach Anspruch 5,
**dadurch gekennzeichnet, dass** die ersten Durchtrittsöffnungen (13) im Bereich der innenliegenden Falten (12) der ersten Filterwand angeordnet sind

7. Filterelement nach Anspruch 5 oder 6,
**dadurch gekennzeichnet, dass** die ersten Durchtrittsöffnungen (13) im Bereich der außenliegenden Falten (11) der ersten Filterwand angeordnet sind

8. Filterelement nach Anspruch 5, 6 oder 7,
**dadurch gekennzeichnet, dass** die zweiten Durchtrittsöffnungen (23) im Bereich der innenliegenden Falten (21) der zweiten Filterwand angeordnet sind.

9. Filterelement nach Anspruch 5, 6, 7 oder 8,
**dadurch gekennzeichnet, dass** die zweiten Durchtrittsöffnungen (23) im Wandbereich (24, 25) zwischen den Falten (21, 22) der zweiten Filterwand angeordnet sind.

10. Filterelement nach einem der vorhergehenden Ansprüche,
**dadurch gekennzeichnet, dass** die Wand der ersten und/oder zweiten Filterwand in der Faltungslinie eine gegenüber dem restlichen Wandbereich verringerte Festigkeit aufweist.

11. Filterelement nach einem der vorhergehenden Ansprüche,
**dadurch gekennzeichnet, dass** die Wand der ersten und/oder zweiten Filterwand in der Faltungslinie andere Materialeigenschaften hat als der restliche Wandbereich.

12. Filterelement nach einem der vorhergehenden Ansprüche,
**dadurch gekennzeichnet, dass** die Wand der ersten und/oder zweiten Filterwand in der Faltungslinie Perforationen aufweist.

13. Gasfilter,
**gekennzeichnet durch** mehrere nebeneinander und/oder übereinander angeordnete Filterelemente nach einem der vorhergehenden Ansprüche.

14. Gasfilter nach Anspruch 13,
**dadurch gekennzeichnet, dass** die Filterelemente übereinander angeordnet sind und mittels eines Verbindungsprofils miteinander verbunden sind, umfassend:
- einen oberen Aufnahmebereich (50) zum Aufnehmen des oberen Filterelements,
- einen unteren Aufnahmebereich (60) zum Aufnehmen des unteren Filterelements,
- einen zwischen den beiden Aufnahmebereichen angeordneten Partikelsammelbereich (70), und
- zumindest eine zwischen dem oberen Aufnahmebereich und dem Partikelsammelbereich angeordnete Öffnung (51), durch welche die Partikel aus dem oberen Filterelement in den Partikelsammelbereich fallen können.

15. Gasfilter nach Anspruch 14,
**gekennzeichnet durch** eine Öffnungsklappe (72), die im geschlossenen Zustand den Partikelsammelbereich von der Umgebung abschließt und im geöffneten Zustand das Entfernen der gesammelten Partikel aus dem Partikelsammelbereich ermöglicht.

16. Gasfilter nach Anspruch 14 oder 15,
**dadurch gekennzeichnet, dass** zwischen dem Partikelsammelbereich und dem oberen bzw, dem unteren Aufnahmebereich ein horizontaler Wandabschnitt (53) ausgebildet ist, der den Eintritt von Rohgas aus dem Partikelsammelbereich des Verbindungsprofils in den Zwischenströmungsbereich des Filterelements verhindert.

17. Gasfilter nach einem der Ansprüche 13 - 16,
**dadurch gekennzeichnet, dass** das unterste Filterelement mittels eines Verbindungsprofils nach Anspruch 14, 15 oder 16 am Boden abgestützt ist.

18. Herstellungsverfahren für ein Filterelement nach einem der Ansprüche 1-12, mit den Schritten:
- Bereitstellen einer ersten Wandplatte für eine erste Filterwand,
- Bereitstellen einer zweiten Wandplatte für eine zweite Filterwand,
- Einbringen von ersten Öffnungen in die erste Filterwand,
- Einbringen von zweiten Öffnungen in die zweite Filterwand,
- Verbinden der ersten Filterwand mit der zweiten Filterwand
**dadurch gekennzeichnet, dass**
- die erste und/oder die zweite Filterwand in einem Extrusionsverfahren aus einem Kunststoff hergestellt wird
- **dass** in der ersten und/oder der zweiten Filterwand ein linienförmiger Faltungsbereich erzeugt wird, der besser verformbar ist als der übrige Wandbereich, und
- dass die Verbesserung der Verformbarkeit durch eine abschnittsweise Verringerung der Wandstärke erzeugt wird, vorzugsweise durch einen spanlosen Umformvorgang.

19. Herstellungsverfahren nach Anspruch 18,
**dadurch gekennzeichnet, dass** in der ersten und/oder der zweiten Wandplatte eine linienförmige Materialschwächung eingebracht wird.

20. Herstellungsverfahren nach einem der vorhergehenden Ansprüche 18-19,
**dadurch gekennzeichnet, dass** die Verbesserung der Verformbarkeit durch eine linienförmige Perforation erzeugt wird.

21. Herstellungsverfahren nach einem der vorhergehenden Ansprüche 18-20,
**dadurch gekennzeichnet, dass** der linienförmige Faltungsbereich mittels eines hinter dem Extrusionswerkzeug angeordneten Werkzeugs zur Erzeugung der Wandstärkenverringerung bzw. der Perforation erzeugt wird.

22. Herstellungsverfahren nach einem der vorhergehenden Ansprüche 18-21,
**dadurch gekennzeichnet, dass** sich der linienförmige Faltungsbereich in Extrusionsrichtung erstreckt.

23. Herstellungsverfahren nach Anspruch 22,
**dadurch gekennzeichnet, dass** der linienförmige Faltungsbereich mittels eines Extrusionswerkzeuges erzeugt wird, das eine Öffnung entsprechend des Querschnitts der Wandplatte aufweist mit entsprechenden Vorsprüngen zur Erzeugung der Wandstärkenverringerung(en).

24. Herstellungsverfahren nach einem der vorhergehenden Ansprüche 22-23,
**dadurch gekennzeichnet, dass** die Verbesserung der plastischen Verformbarkeit durch eine Coextrusion eines besser verformbaren Materials im linienförmigen Faltungsbereich erzeugt wird.

25. Herstellungsverfahren nach einem der vorhergehenden Ansprüche 18-24,
**dadurch gekennzeichnet, dass** die ersten und/oder zweiten Öffnungen durch Stanzen in die erste bzw. zweite Filterwand eingebracht werden.

26. Herstellungsverfahren nach einem der vorhergehenden Ansprüche 18-25,
**dadurch gekennzeichnet, dass** die Öffnungen vor dem Faltvorgang eingebracht werden.

27. Herstellungsverfahren nach einem der vorhergehenden Ansprüche 22 oder 23-26, wenn abhängig von Anspruch 22,
**dadurch gekennzeichnet, dass** die erste und/oder zweite Filterwand mittels eines dem Extrusionswerkzeug nachgeschalteten Umformwerkzeug wechselseitig gefaltet wird, vorzugsweise mittels Warmverformung.

28. Herstellungsverfahren nach Anspruch 27,
**dadurch gekennzeichnet, dass** die extrudierte erste und/oder zweite Filterwand vor oder bei dem Faltvorgang quer zur Extrusionsrichtung gestreckt wirkt.

29. Herstellungsverfahren nach einem der vorhergehenden Ansprüche 18-21,
**dadurch gekennzeichnet, dass** sich der linienförmige Faltungsbereich quer zur Extrusionsrichtung erstreckt.

30. Herstellungsverfahren nach einem der vorhergehenden Ansprüche 18-29,
**dadurch gekennzeichnet, dass** die Öffnungen mittels einer dem gefalteten Filterquerschnitt angepassten Matrize nach dem Faltvorgang eingebracht werden.

## Claims

1. A filter element for separating particles from a particle-laden raw gas stream, comprising:
- a first filter wall (10) with a plurality of first passage openings (13) for the contaminated raw gas to enter,
- a second filter wall (20) which is arranged in the direction of flow after the first filter wall and has a plurality of second passage openings (23) for the clean gas to exit,
- an intermediate flow space (40) formed between the first and the second filter wall,
the second passage openings (23) being arranged offset relative to the first passage openings (13) in the direction of flow,
the second filter wall having at least one baffle plate region (26) which is arranged such that the particles emerging through the first passage openings at least partially strike it, and
the first and/or the second filter wall being formed as a wall folded alternately inwards and outwards relative to the intermediate flow space, in particular as a folded sheet or plate,
**characterised in that** the wall of the first and/or second filter wall has in the region of the folds (11, 12, 21, 22) increased deformability compared with the rest of the wall region (14, 15, 24, 25), **in that** the wall of the first and/or second filter wall in the fold line has a wall thickness which is reduced in sections compared with the rest of the wall region.

2. A filter element according to Claim 1, **characterised in that** the entire first (10) and/or second (20) filter wall is made liquid-resistant.

3. A filter element according to the preceding Claim 1 or 2, **characterised in that** a liquid-resistant baffle plate region or the filter wall/filter walls (10; 20) consist of a base material, preferably paper or paperboard, and are coated with a liquid-resistant material.

4. A filter element according to one of the preceding claims, **characterised in that** the region (26) around the folding points (22) of the second filter wall (20), which are located externally on the filter element, is the baffle plate region.

5. A filter element according to one of the preceding claims, in which both filter walls are folded, **characterised in that** the distances between the outer folds (11) of the first filter wall are identical to the distances between the inner folds (21) of the second filter wall, and the two filter elements are arranged relative to each other such that in each case folds in the same direction are located opposite one another.

6. A filter element according to Claim 5, **characterised in that** the first passage openings (13) are arranged in the region of the inner folds (12) of the first filter wall.

7. A filter element according to Claim 5 or 6, **characterised in that** the first passage openings (13) are arranged in the region of the outer folds (11) of the first filter wall.

8. A filter element according to Claim 5, 6 or 7, **characterised in that** the second passage openings (23) are arranged in the region of the inner folds (21) of the second filter wall.

9. A filter element according to Claim 5, 6, 7 or 8, **characterised in that** the second passage openings (23) are arranged in the wall region (24, 25) between the folds (21, 22) of the second filter wall.

10. A filter element according to one of the preceding claims, **characterised in that** the wall of the first and/or second filter wall in the fold line has a reduced strength compared with the rest of the wall region.

11. A filter element according to one of the preceding claims, **characterised in that** the wall of the first and/or second filter wall in the fold line has different material properties from the rest of the wall region.

12. A filter element according to one of the preceding claims, **characterised in that** the wall of the first and/or second filter wall has perforations in the fold line.

13. A gas filter, **characterised by** a plurality of filter elements according to one of the preceding claims which are arranged next to one another and/or above one another.

14. A gas filter according to Claim 13, **characterised in that** the filter elements are arranged above one another and are connected together by means of a connection profile, comprising:
- an upper receiving region (50) for receiving the upper filter element,
- a lower receiving region (60) for receiving the lower filter element,
- a particle collection region (70) arranged between the two receiving regions, and
- at least one opening (51) arranged between the upper receiving region and the particle collection region, through which opening the particles can drop out of the upper filter element into the particle collection region.

15. A gas filter according to Claim 14, **characterised by** an opening flap (72) which in the closed state closes off the particle collection region from the environment and in the opened state permits the removal of the collected particles from the particle collection region.

16. A gas filter according to Claim 14 or 15, **characterised in that** a horizontal wall section (53) is formed between the particle collection region and the upper or the lower receiving region, which section prevents raw gas from entering the intermediate flow region of the filter element from the particle collection region of the connection profile.

17. A gas filter according to one of Claims 13-16, **characterised in that** the lowermost filter element is supported on the ground by means of a connection profile according to Claim 14, 15 or 16.

18. A production method for a filter element according to one of Claims 1-12, with the steps:
- provision of a first wall plate for a first filter wall,
- provision of a second wall plate for a second filter wall,
- introduction of first openings into the first filter wall,
- introduction of second openings into the second filter wall,
- connection of the first filter wall to the second filter wall,
**characterised in that**
- the first and/or the second filter wall is produced from a plastics material in an extrusion process,
- a linear fold region is produced in the first and/or the second filter wall, which region can be deformed better than the rest of the wall region, and
- the improvement of the deformability is produced by a reduction of the wall thickness in sections, preferably by a non-cutting forming operation.

19. A production method according to Claim 18, **characterised in that** a linear weakening of the material is introduced into the first and/or the second wall plate.

20. A production method according to one of the preceding Claims 18-19, **characterised in that** the improvement in the deformability is produced by a linear perforation.

21. A production method according to one of the preceding Claims 18-20, **characterised in that** the linear fold region is produced by means of a tool, arranged behind the extrusion die, for producing the reduction in wall thickness or the perforation.

22. A production method according to one of the preceding Claims 18-21, **characterised in that** the linear fold region extends in the direction of extrusion.

23. A production method according to Claim 22, **characterised in that** the linear fold region is produced by means of an extrusion die which has an opening corresponding to the cross-section of the wall plate with corresponding projections for producing the reduction(s) in wall thickness.

24. A production method according to one of the preceding Claims 22-23, **characterised in that** the improvement in the plastic deformability is produced by a coextrusion of a material which is better deformable in the linear fold region.

25. A production method according to one of the preceding Claims 18-24, **characterised in that** the first and/or second openings are introduced into the first or second filter wall by punching.

26. A production method according to one of the preceding Claims 18-25, **characterised in that** the openings are introduced before the folding operation.

27. A production method according to one of the preceding Claims 22 or 23-26, if dependent on Claim 22, **characterised in that** the first and/or second filter wall is alternately folded by means of a forming tool which succeeds the extrusion die, preferably by means of hot deformation.

28. A production method according to Claim 27, **characterised in that** the extruded first and/or second filter wall acts stretched transversely to the direction of extrusion before or during the folding operation.

29. A production method according to one of the preceding Claims 18-21, **characterised in that** the linear fold region extends transversely to the direction of extrusion.

30. A production method according to one of the preceding Claims 18-29, **characterised in that** the openings are introduced after the folding operation by means of a die adapted to the folded filter cross-section.

## Revendications

1. Elément filtrant destiné à séparer les particules d'un flux de gaz brut chargé en particules, comprenant :
- une première paroi de filtre (10) dotée de plusieurs premières ouvertures de passage (13) pour l'entrée du gaz brut contaminé,
- une seconde paroi de filtre (20) disposée dans le sens d'écoulement derrière la première paroi de filtre et présentant plusieurs secondes ouvertures de passage (23) pour la sortie du gaz purifié,
- un espace d'écoulement intermédiaire (40) réalisé entre la première et la seconde paroi de filtre,
dans lequel les secondes ouvertures de passage (23) sont disposées dans le sens d'écoulement en déport par rapport aux premières ouvertures de passage (13),
la seconde paroi de filtre présente au moins une zone (26) de paroi d'impact disposée de sorte que les particules traversant les premières ouvertures de passage la heurtent au moins en partie, et
la première et/ou la seconde paroi de filtre est réalisée comme une paroi pliée en alternance vers l'intérieur et vers l'extérieur par rapport à l'espace d'écoulement intermédiaire, en particulier comme une feuille ou une plaque pliée,
**caractérisé en ce que** la paroi de la première et/ou seconde paroi de filtre dans la zone des pliages (11, 12, 21, 22) possède une déformabilité élevée par rapport à la zone de paroi restante (14, 15, 24, 25) du fait qu'elle présente dans la ligne de pliage une épaisseur de paroi réduite par sections par rapport à la zone de paroi restante.

2. Elément filtrant selon la revendication 1, **caractérisé en ce que** la première (10) et/ou la seconde (20) paroi de filtre entière est réalisée de manière hydrofuge.

3. Elément filtrant selon la revendication précédente 1 ou 2, **caractérisé en ce qu'**une zone de paroi d'impact hydrofuge ou la/les paroi(s) de filtre (10 ; 20) se composent d'un matériau de base, de préférence de papier ou de carton et sont revêtues d'un matériau hydrofuge.

4. Elément filtrant selon l'une quelconque des revendications précédentes, **caractérisé en ce que** la zone (26) entoure les points de pliage (22), formé sur l'extérieur de l'élément filtrant, de la seconde paroi de filtre (20) de la zone de paroi d'impact.

5. Elément filtrant selon l'une quelconque des revendications précédentes, pour lequel les deux parois de filtre sont pliées, **caractérisé en ce que** les distances entre les pliages extérieurs (11) de la première paroi de filtre sont identiques aux distances entre les pliages intérieurs (21) de la seconde paroi de filtre et **en ce que** les deux éléments de filtre sont disposés l'un par rapport à l'autre de sorte que des pliages dans le même sens se fassent face respectivement.

6. Elément filtrant selon la revendication 5, **caractérisé en ce que** les premières ouvertures de passage (13) sont disposées dans la zone des plis intérieurs (12) de la première paroi de filtre.

7. Elément filtrant selon la revendication 5 ou 6, **caractérisé en ce que** les premières ouvertures de passage (13) sont disposées dans la zone des plis extérieurs (11) de la première paroi de filtre.

8. Elément filtrant selon la revendication 5, 6 ou 7, **caractérisé en ce que** les secondes ouvertures de passage (23) sont disposées dans la zone des plis intérieurs (21) de la seconde paroi de filtre.

9. Elément filtrant selon la revendication 5, 6, 7 ou 8, **caractérisé en ce que** les secondes ouvertures de passage (23) sont disposées dans la zone de paroi (24, 25) entre les plis (21, 22) de la seconde paroi de filtre.

10. Elément filtrant selon l'une quelconque des revendications précédentes, **caractérisé en ce que** la paroi de la première et/ou seconde paroi de filtre présente, dans la ligne de pliage, une résistance réduite par rapport à la zone de paroi restante.

11. Elément filtrant selon l'une quelconque des revendications précédentes, **caractérisé en ce que** la paroi de la première et/ou de la seconde paroi de filtre présente, dans la ligne de pliage, d'autres propriétés de matériau que la zone de paroi restante.

12. Elément filtrant selon l'une quelconque des revendications précédentes, **caractérisé en ce que** la paroi de la première et/ou seconde paroi de filtre présente des perforations dans la ligne de pliage.

13. Filtre à gaz, **caractérisé par** plusieurs éléments filtrants disposés les uns à côté des autres et/ou les uns au-dessus des autres selon l'une quelconque des revendications précédentes.

14. Filtre à gaz selon la revendication 13, **caractérisé en ce que** les éléments filtrants sont disposés les uns au-dessus des autres et sont reliés entre eux par un profilé de liaison, comprenant :
- une zone de réception supérieure (50) pour la réception de l'élément filtrant supérieur,
- une zone de réception inférieure (60) pour la réception de l'élément filtrant inférieur,
- une zone collectrice de particules (70) disposée entre les deux zones de réception, et
- au moins une ouverture (51) disposée entre la zone de réception supérieure et la zone collectrice de particules, par laquelle les particules peuvent tomber de l'élément filtrant supérieur dans la zone collectrice de particules.

15. Filtre à gaz selon la revendication 14, **caractérisé par** un clapet d'ouverture (72) qui sépare, à l'état fermé, la zone collectrice de particules de l'environnement et permet, à l'état ouvert, le retrait des particules collectées de la zone collectrice de particules.

16. Filtre à gaz selon la revendication 14 ou 15, **caractérisé en ce qu'**une section de paroi (53) horizontale est réalisée entre la zone collectrice de particules et la zone de réception supérieure ou inférieure, laquelle empêche du gaz brut de la zone collectrice de particules du profilé de liaison d'entrer dans la zone d'écoulement intermédiaire de l'élément filtrant.

17. Filtre à gaz selon l'une quelconque des revendications 13 à 16, **caractérisé en ce que** l'élément filtrant le plus bas est en appui à l'aide d'un profilé de liaison selon la revendication 14, 15 ou 16 contre le fond.

18. Procédé de fabrication pour un élément filtrant selon l'une quelconque des revendications 1 à 12, comportant les étapes suivantes :
- mise à disposition d'une première plaque de paroi pour une première paroi de filtre,
- mise à disposition d'une seconde plaque de paroi pour une seconde paroi de filtre,
- introduction de premières ouvertures dans la première paroi de filtre,
- introduction de secondes ouvertures dans la seconde paroi de filtre,
- liaison de la première paroi de filtre avec la seconde paroi de filtre,
**caractérisé en ce que**
- la première et/ou la seconde paroi de filtre est fabriquée dans un procédé d'extrusion de matière plastique
- une zone de pliage linéaire est générée dans la première et/ou la seconde paroi de filtre, laquelle peut mieux se déformer que la zone de paroi restante, et
- l'amélioration de la déformabilité est générée par une diminution par sections de l'épaisseur de paroi, de préférence par un processus de déformation sans enlèvement de copeaux.

19. Procédé de fabrication selon la revendication 18, **caractérisé en ce qu'**un affaiblissenaent de matériau linéaire est introduit dans la première et/ou seconde plaque de paroi.

20. Procédé de fabrication selon l'une quelconque des revendications précédentes 18 et 19, **caractérisé en ce que** l'amélioration de la déformabilité est générée par une perforation linéaire.

21. Procédé de fabrication selon l'une quelconque des revendications précédentes 18 à 20, **caractérisé en ce que** la zone de pliage linéaire est générée par un outil disposé derrière l'outil d'extrusion pour la génération de la diminution de l'épaisseur de paroi ou de la perforation.

22. Procédé de fabrication selon l'une quelconque des revendications précédentes 18 à 21, **caractérisé en ce que** la zone de pliage linéaire s'étend dans le sens d'extrusion.

23. Procédé de fabrication selon la revendication 22, **caractérisé en ce que** la zone de pliage linéaire est générée par un outil d'extrusion qui présente une ouverture selon la section de la plaque de paroi avec des saillies correspondantes pour la génération de la/des diminution(s) d'épaisseur de paroi.

24. Procédé de fabrication selon l'une quelconque des revendications précédentes 22 à 23, **caractérisé en ce que** l'amélioration de la déformabilité plastique est générée par une coextrusion d'un matériau pouvant mieux se déformer dans la zone de pliage linéaire.

25. Procédé de fabrication selon l'une quelconque des revendications précédentes 18 à 24, **caractérisé en ce que** les premières et/ou les secondes ouvertures sont introduites par estampage dans la première ou seconde paroi de filtre.

26. Procédé de fabrication selon l'une quelconque des revendications précédentes 18 à 25, **caractérisé en ce que** les ouvertures sont introduites avant le processus de pliage.

27. Procédé de fabrication selon l'une quelconque des revendications précédentes 22 ou 23 à 26, lorsqu'elle dépend de la revendication 22, **caractérisé en ce que** la première et/ou la seconde paroi de filtre est pliée en alternance par un outil de façonnage monté en aval de l'outil d'extrusion, de préférence par déformation à chaud.

28. Procédé de fabrication selon la revendication 27, **caractérisé en ce que** la première et/ou la seconde paroi de filtre extrudée agit en étant étirée transversalement au sens d'extrusion avant ou lors du processus de pliage.

29. Procédé de fabrication selon l'une quelconque des revendications précédentes 18 à 21, **caractérisé en ce que** la zone de pliage linéaire s'étend transversalement au sens d'extrusion.

30. Procédé de fabrication selon l'une quelconque des revendications précédentes 18 à 29, **caractérisé en ce que** les ouvertures sont introduites après le processus de pliage par une matrice adaptée à la section du filtre pliée.
